# EUROPEAN PATENT APPLICATION

(11) **EP 0 842 595 A2**
(43) Date of publication of application: **20.05.1998**
(21) Application number: 97119006.1
(22) Date of filing: 31.10.1997
(51) Int. Cl.: A01B 71/08

(54) **Protective structure for the power take off of an agricultural vehicle**

(30) Priority: 07.11.1996 IT BO960561
(71) Applicant: CBM S.p.A., 41100 Modena (IT)
(72) Inventor: Cornia, Enrico Maria, 41100 Modena (IT)
(74) Representative: Provvisionato, Paolo

(57) **Abstract**

A protective structure for the power take off (18) of an agricultural vehicle or tractor comprises a covering structure including an immovable plate (20) on which at least one movable plate (22) is slidably mounted and is movable along a plane, the movable plate being guided by guide pegs or bolts (28) passing through slots (30) provided on the immovable plate. The movable plate can therefore be moved from an extended position to a reduced or retracted position.

## Description

The present invention relates to a protective structure for the power take off of an agricultural vehicle.

In general, the power take off which is located in the rear part of an agricultural vehicle or tractor, near the tow hitch, is covered by a case structure whose resistance and smallest dimensions are normally established by specific standards in this field and, in any case, they must satisfy certain requisites in order to guarantee the safety of people standing near the power take off.

Usually, in case the tow hitch is immovable, the case structure which protects the power took off is also immovable. Nevertheless, in case the tractor is provided with a system for adjusting the height of the tow hitch, it is necessary that some system is provided so that the upper part of the case does not interfere with the tow hitch during the height adjustment manoeuvre.

All known systems used to such a purpose show some disadvantages, for example because their stiffness is insufficient or because they are uncomfortable or cumbersome in use, or because they are expensive and the manufacturing or maintenance thereof is expensive or difficult.

The object of the present invention is to solve the problems of the protection cases of the known type. In order to achieve this object, the present invention relates to a protective structure for the power take off of an agricultural vehicle, having the characteristics set forth in the following Claim 1.

An advantage of the invention consists of the fact that the extension and reduction operations of the protective structure, which are necessary when adjusting the height of the tow hitch, can be easily performed by an operator even with the use of a single hand. Besides, also in its reduced position, the protective structure maintains a satisfactory stiffness and moreover the area of the power take off is left uncovered only for the minimum.

A further advantage of this invention is that the number of the component elements is extremely little, with a consequent reduction of production, installation and maintenance costs.

Another advantage of this invention is that the areas to be swept by the moving elements are restricted, because the moving plate(s) of the structure move in a planar way.

Further characteristics and advantages of the present invention will become clear from the detailed description which follows with reference to the appended drawings, which are given purely by way of non-limiting example, and in which:
- Figure 1 is a perspective view of an agricultural tractor,
- Figure 2 is a lateral view of a tow hitch group of the tractor of Figure 1, comprising a protective structure according to the present invention,
- Figure 3 is a view from above of the tow hitch group of Figure 2 according to arrow III, wherein the protective structure is in a first extended position,
- Figure 4 is view analogue to that of Figure 3, wherein the protection structure is in a second position reduced,
- Figure 5 is a lateral view of a tow hitch group, comprising a variant of the protective structure of the present invention, and
- Figure 6 is a view from above of the tow hitch group of Figure 5 according to arrow VI.

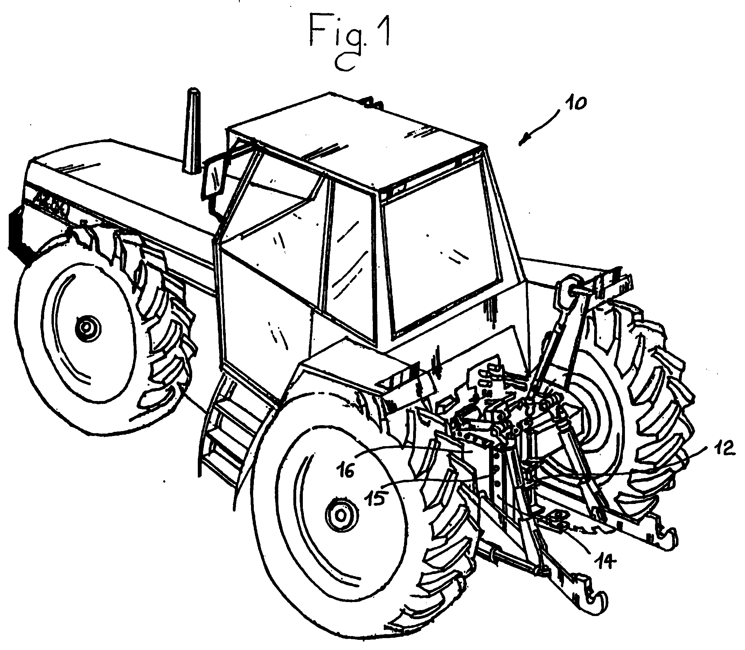

With reference now to Figure 1, on the rear part of an agricultural vehicle or tractor 10 a tow hitch 12 is mounted, whose position in height can be modified by means of a hitch support trolley 26 which can slide vertically along two guides 14 and which can be blocked in correspondence with any one of the vertical adjustment holes 15. The guides 14 are mounted on or integral with two support flanks 16 secured to the tractor 10. Naturally, the construction details of the height adjustment system of the tow hitch 12 may vary with respect to those illustrated in the examples and may be of any known system, since they do not affect the characteristics of the present invention.

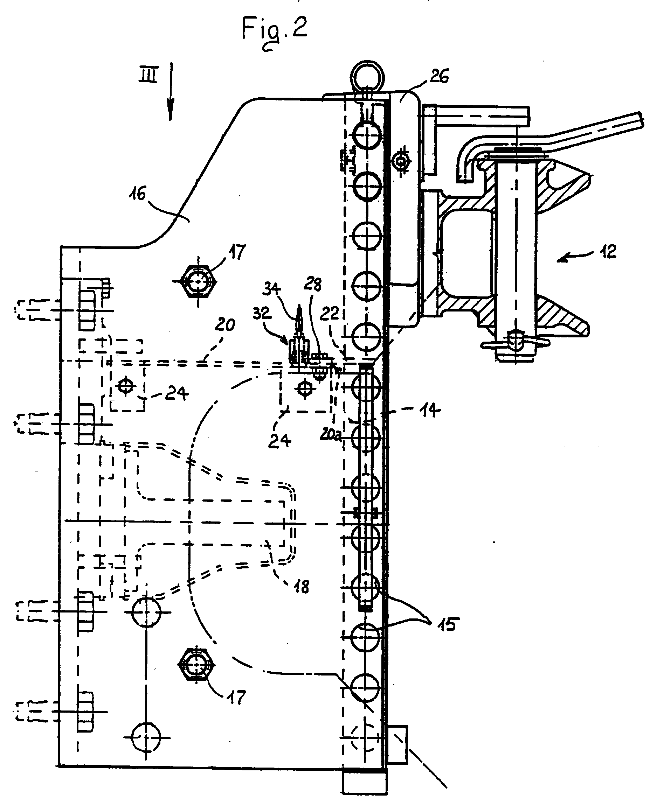

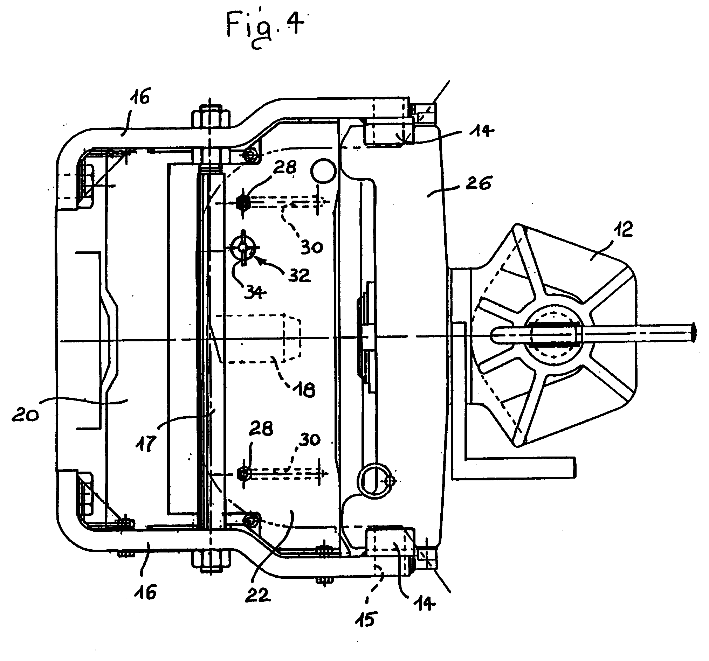

As it can better be seen in Figures 2 and 4, the two support flanks 16, connected to each other by tie rods 17, act as lateral protections for a power take off 18, above which is mounted a covering structure which comprises a first, preferably lower plate 20 and a second, preferably upper plate 22, which for example, even if not compulsorily, are made of metal sheet. The lower plate 20 is provided with folded appendixes 24 fixed to the flanks 16 and extends to cover the area comprised thereinbetween. The rear edge 20a of the lower plate 20 is spaced out from the guides 14 so as to allow the trolley 26, which is vertically movable for adjusting the height of the tow hitch 12, to pass.

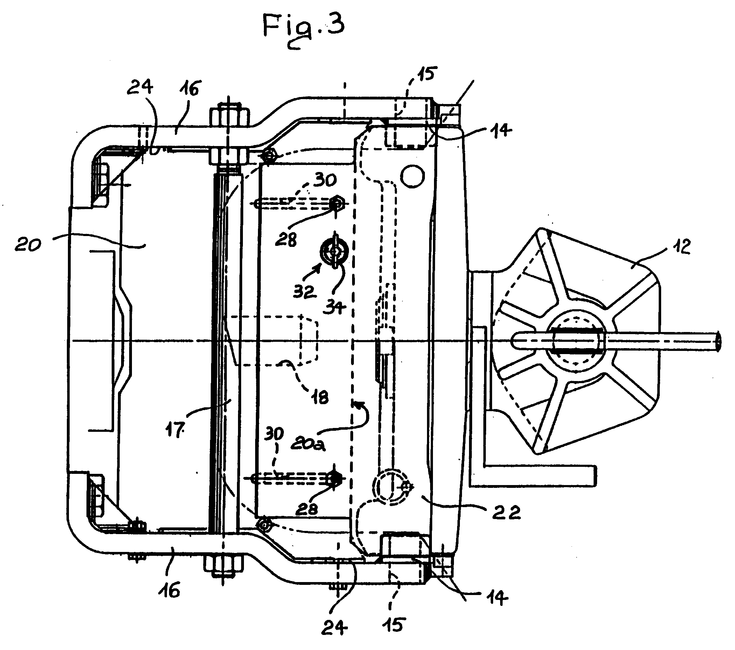

The upper plate 22 is slidably mounted on the lower plate 20 through a pair of bolts 28 inserted into longitudinal slots 30 provided on the lower plate 20 and so fastened that a minimum backlash is left between the plates 20, 22. It is naturally possible to substitute the bolts 28 with any other guide means of a known type which provide a relative longitudinal sliding of the two plates 20, 22 while guaranteeing a certain bending strength to the two plates taken as a whole. The length of the slots 30 is such that the upper plate 22 can slide on the lower plate 20 from the extended position of Figure 3 and the reduced or retracted position of Figure 4. On the lower plate 22 is mounted a locking mechanism 32, for example of a spring-and-peg type as illustrated in Figures 2 to 4, whereby when the upper plate 22 is in the extended position, the peg - operated from the above by means of a ring 34 - is engaged into a hole obtained in the lower plate 20. It is however possible to lock the plates in the extended position by means of any other locking mechanism which accomplishes the same function of the illustrated one. Moreover, in the extended position the plate 22 sides are inserted at least partially into horizontal grooves provided on the guides 14.

During the use, the upper plate 22 is normally in the extended position of Figure 3, wherein the locking mechanism 32 prevents a relative sliding of the two plates 20, 22. The upper plate 22 is therefore in its most backward position and it forms, together with the lower plate 20 and with the flanks 16, a three-sided protective structure for the power take off 18. When it is necessary to move the trolley 26 to adjust the height of the tow hitch 12, it is sufficient to unlock the locking mechanism 32 and to push forward the upper plate 22 until the bolts 28 reach the front edge of the slot 30, shown on the left in Figure 4. When the adjustment is completed, the upper plate 22 can be slidably brought back to the extended position of Figure 3.

In particular, it has been found that when using a spring-and-peg locking system like the one illustrated in Figures 2 to 4, the spring - in the reduced position of the protective structure, illustrated in Figure 3 - urges the peg against the upper surface of the lower plate 20 to a certain extent which causes a friction sufficient to hold the upper plate 22 in the retracted position even in presence of vibrations or in case the tractor is placed on a slope. In the extended position, instead, the plate 22 has proved to be sufficiently resistant to stresses, since it is resting on the plate 20 and in the grooves provided on the guides 14. Moreover, as already mentioned, the bolts 28 - even though they are not completely fastened - guarantee a certain resistance to stresses which otherwise would tend to rotate in a vertical plane the plate 22 with respect to the underlying plate 20. As a mere example, it has been experimentally proved that that the bolts 28 can guarantee a good connection between the plates 20, 22, however still allowing a relative sliding thereof, when they are unscrewed of about a half turn with respect to a position of complete fastening of the two plates. Naturally, known systems for blocking the nuts, such as additional lock nuts or self-locking nuts, are provided for, in order to avoid that the tractor vibrations may, with use, further loose the bolts 28 with respect to the optimum fastening.

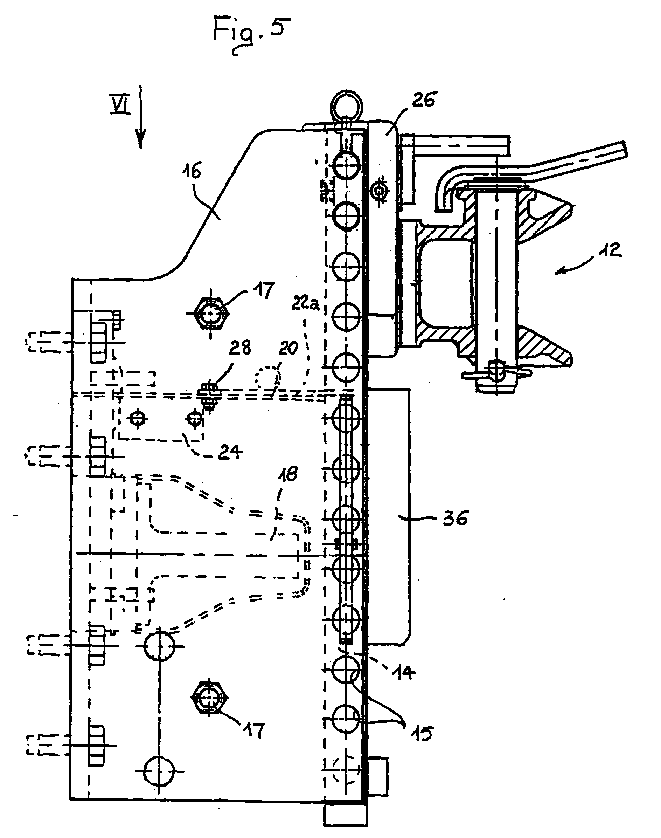

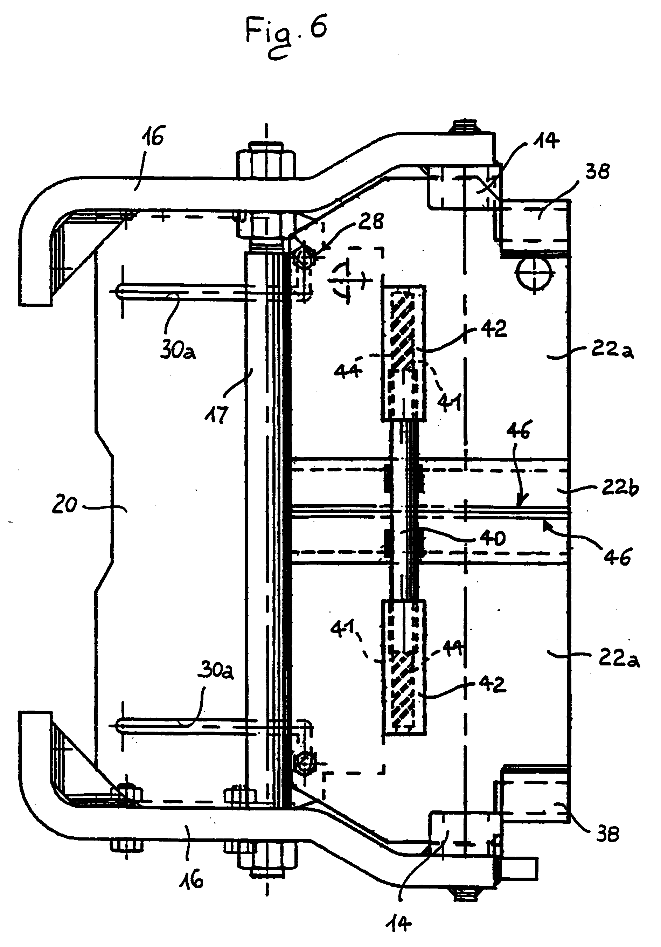

In Figures 5 and 6 is illustrated another embodiment of the invention, particularly suitable in those installations in which the horizontal distance between the tow hitch 12 and the power take off is kept particularly low in order to reduce the as much as possible the overhanging of the tow hitch 12, so as to avoid the problems which may derive from a possible lifting of the tractor fore-carriage in presence of a heavy trailer. In the example of Figures 5 and 6, screens 36 protect laterally the power take off 18.

The upper part of the protective structure comprises - as in the previous example - a lower plate 20 fixed to the flanks 16. Two semi-plates 22a abut on the lower plate 20 and are slidably mounted thereon by means of the bolts 28 which are engaged into L-shaped slots 30a provided on the lower plate 20. Each semi-plate 22a is provided with an appendix 38 whose rear part, in the closed position illustrated in Figure 6, rests on the guide 14. In the illustrated example, the appendixes 38 extend vertically downwards to form the lateral screens 36. It is however possible to provide fixed screens 36, mounted on the flanks 16. In the extended position, the two semi-plates 22a are spaced from each other in a widened position in which they are partially inserted into horizontal grooves obtained on the guides 14. The space between the semi-plates 22a is covered by a plaque 22b to which a transverse bar 40 is fixed, whose edges 41 are placed into two sleeves or cup-like supports 42 fixed respectively onto each semi-plate 22a, into which sleeves two springs 44 urging the edges 41 of the transverse bar 40 are inserted.

In the extended and widened position of the protective structure, the springs 44 urge both the bar 40 and the ends of the sleeves 42, so as to keep the semi-plates 22a spaced with respect to each other and the appendixes 38 resting onto the guides 14. When it is necessary to clear the guides 14 to allow the vertical sliding of the tow hitch, the semi-plates 22a are firstly brought nearer one to the other in contrast to the action of the springs 44 so that the appendixes 38 move away from the guides 14. In Figure 6, the broken lines 46 show the positions reached by the adjacent edges of the semi-plates at the end of the approaching phase thereof, during which first portions of the semi-plates slide on the lower plate 20, and second portions slide underneath the plaque 22b.

Then, the group formed by the semi-plates 22a and the plaque 22b is pushed forward over the lower plate 20, thus clearing the guides 14. The reverse operation brings back the protective structure to the extended and widened position.

The manoeuvres of extending and reducing the protective structure are guided by the bolts 28 inserted into the L-shaped slots 30a. In the reduced position, the forces exerted by the springs 44 keep the semi-plates 22a into contact with the flanks 16, so that the resulting friction holds the protective structure in the reduced position.

Naturally, the principle of the invention remaining the same, the embodiments and the details of construction may vary widely without thereby departing from the scope of the present invention.

## Claims

1. Protective structure for the power take off of an agricultural vehicle, characterised in that it comprises a covering structure including at least one plate (22, 22a, 22b) movable along a plane from an extended position to a reduced or retracted position.

2. Protective structure according to Claim 1, characterised in that the covering structure comprises a locking mechanism (32, 38) to lock the at least one movable plate in the extended position.

3. Protective structure according to Claim 1, characterised in that the covering structure further comprises at least one immovable plate (20), the immovable plate (20) and the at least one movable plate (22, 22a, 22b) being parallel to each other and at least partially overlapping, the overlap of the immovable and movable plates being minimum in the extended position and maximum in the in the retracted position.

4. Protective structure according to Claim 3, characterised in that the at least one movable plate (22, 22a) is mounted on the immovable plate and can slide thereon along a predetermined path (30, 30a) comprising a first straight section, the positions of the movable plate at the ends of the straight section corresponding respectively to the extended and retracted positions.

5. Protective structure according to Claim 4, characterised in that it comprises at least two movable plates or semi-plates (22a) mounted on the immovable plate (20) and slidable thereon along a path (30a) further comprising a second straight section consecutive to the first section and at an angle thereto, the positions of the two movable plates (22a) at the ends of the second straight section of the path corresponding respectively to positions in which the movable plates (22a) are spaced or near to each other.

6. Protective structure according to Claim 4, characterised in that the immovable plate (20) is provided with at least one slot (30, 30a), the at least one movable plate (22, 22a) being slidably mounted on the immovable plate (20) by means of guide means (28) passing through the at least one slot (30, 30a) to guide the at least one movable plate along the predetermined path, the ends of the slot (30, 30a) defining two end positions for the guide means (28), respectively corresponding to the extended and retracted positions of the structure.

7. Protective structure according to Claims 5 and 6, characterised in that it comprises at least two L-shaped slots (30a).

8. Protective structure according to Claim 5, characterised in that it further comprises a plaque (22b) at least partially overlapping the two movable plates (22a), the movable plates being slidably mounted with respect to the plaque (22b) by means of urging elastic means (40, 42, 44) to resiliently contrast the relative approach of the two movable plates (22a).

9. Adjusting device for adjusting the height of the position of a tow hitch (12) for an agricultural vehicle, of the type adapted to be placed close to a power take off (18), comprising a protective structure for the power take off according to any of the above claims.

10. Adjusting device according to Claim 9, comprising two flanks (16) on which facing guides (14) are mounted, characterised in that the at least one movable plate (22, 22a) is disposed perpendicular to the guides (14), each guide (14) being provided with a groove for supporting the at least one movable plate (22, 22a) in the extended position.
